# EUROPEAN PATENT APPLICATION

(11) **EP 4 674 688 A1**
(43) Date of publication of application: **07.01.2026**
(21) Application number: 24186836.3
(22) Date of filing: 05.07.2024
(51) Int. Cl.: B60Q 1/26, F21S 43/14, F21S 43/239, F21S 43/245, F21S 43/249, F21S 43/31

(54) **LIGHTING DEVICE FOR A VEHICLE**

(71) Applicant: Röchling Automotive SE, 68165 Mannheim (DE)
(72) Inventor: Iviglia, Alessandro, 39010 Tesimo (IT); Girardi, Saverio, 38123 Trento (IT)
(74) Representative: Ullrich & Naumann PartG mbB

(57) **Abstract**

The invention relates to a lighting device (1) for a vehicle, comprising a circuit board (2), wherein the circuit board (2) comprises first lighting elements (5a-5d) on a first section (4) of the circuit board (2), second lighting elements (7a-7c) on a second section (6) of the circuit board (2), and at least one light guide element (8) for redirecting light from the first lighting elements (5a-5d), wherein the first and second section (4, 6) are spaced apart from another, wherein the said at least one light guide element (8) is provided in the form of a prism.

## Description

The invention relates to a lighting device for a vehicle.

The invention further relates to an access port for a fuel tank or an electric battery of a vehicle with a lighting device.

Although applicable to any kind of lighting devices for vehicles, the present invention will be described with regard to lighting devices for fuel tank access ports.

A lighting device for a vehicle is known from DE 10 2018 209 848 A1. Said lighting device comprises a circuit board with lights, which are guided by a light guide to an outer shell of the vehicle. The light guide has an "L-Form" with an inclined surface in order to guide the light.

One of the disadvantages however is that the light guide is difficult to produce, due to the complex form of the light guide.

One of the objectives of the present invention is therefore to provide a lighting device for a vehicle and an access port with a lighting device that is easy and cheap to manufacture. Another objective of the present invention is to provide a lighting device and an access port with a lighting device, which are easy to install.

A further objective of the present invention is to provide an alternative lighting device for a vehicle and an alternative access port with a lighting device.

In an embodiment, the present invention may solve at least one of the objectives by a lighting device for a vehicle, comprising a circuit board, wherein the circuit board comprises first lighting elements on a first section of the circuit board, second lighting elements on a second section of the circuit board, and at least one light guide element for redirecting light from the first lighting elements, wherein the first and second section are spaced apart from another, characterized in that the said at least one light guide element is provided in the form of a prism.

In an embodiment, the present invention may solve at least one of the objectives by an access port for a fuel tank or an electric battery of a vehicle with a lighting device according to any of claims 1 to 14.

One of the advantages may be that lighting device may be produced in a cost-effective way. Another advantage may be that the lighting device may be installed easily.

The term "amount of light" is to be taken in the broadest way possible and relates in the description, preferably in the claims, to an intensity of light, a specific amount of photons per second and/or a perceived brightness of light.

Further features, advantages and preferred embodiments are disclosed or may become apparent in the following.

According to a preferred embodiment of the invention, at least one, preferably both, of the first and second lighting elements is provided in form of one or more LEDs. An advantage of this feature may be that the lights can be produced in a cost-effective way and have a long service life span.

According to a further preferred embodiment of the invention, the first lighting elements are adapted to provide light of different colors and wherein the second lighting elements are adapted to provide light of one color, preferably white color, only. Thereby, the first lights can be used to provide signal lights and the second lights can be used to provide ambient light. An advantage of this may be that the light guide can be small, because it does not need to guide the light of all lights.

According to a further preferred embodiment of the invention, said prism comprises a first side for receiving light from said first lighting elements, a second side placed at an angle to the first side for redirecting the light and a third side for displaying the light. Specifically, the light guide can be provided in the form of a wedge. An advantage of this feature may be that the light guide can be produced easily.

According to a further preferred embodiment of the invention, said angle is between 10° and 70°, preferably between 15° and 55°, especially between 20° and 40°. An advantage of this configuration may be that the light guide can have a low space requirement.

According to a further preferred embodiment of the invention, the second side comprises a mirror coating. This can have the advantage that the light guide can redirect incoming light efficiently. Of course, also other sides may comprise a mirror coating.

According to a further preferred embodiment of the invention, the third side comprises two kinds of areas, wherein a first area is adapted to provide a first amount of light to pass through and a second area, which is adapted to provide a second amount of light to pass through, wherein the first amount is larger than the second amount, preferably wherein a plurality of first and/or second areas is provided. This allows the lighting device to display different shapes and/or symbols on the third side. An advantage of this may be that the lights can be better seen and/or interpreted by a user.

According to a further preferred embodiment of the invention, the light guide element is made at least partly from plastic. Preferably, the light guide element is made entirely from plastic. This has the advantage that it can be produced cheaply.

According to a further preferred embodiment of the invention, the light guide element comprises a plastic lens. The plastic lens can concentrate the light in order to control the light flow out of the light guide element. One of the advantages of this feature is that the light can be guided more accurately.

According to a further preferred embodiment of the invention, the light guide element is adapted to diffuse light from the first lighting elements. This means that a greater area of the third side of the light guide element can be illuminated. An advantage of this configuration could be that a user could better see light signals from the lighting device.

According to a further preferred embodiment of the invention, the lighting device comprises four first lighting elements. Specifically, the lighting device can comprise four lighting elements, which all have different colors. An advantage of this configuration is that the lighting device can produce different light patterns. It could also be envisioned, that three, five or six first lighting elements can be used.

According to a further preferred embodiment of the invention, the lighting device comprises three second lighting elements. An advantage of this configuration is, that an area around the lighting device can be sufficiently brightly lit. It could also be envisioned, that two, four or five second lighting elements can be used.

According to a further preferred embodiment of the invention, the first lighting elements are configured to provide distinct light signals. Specifically, the light of the first light signals creates distinct shapes and/or patterns on the third side of the light guide element. An advantage of this configuration is, that multiple different lights can be activated at the same time without their light interfering with each other.

According to a further preferred embodiment of the invention, the second lighting elements are configured to provide ambient light. An advantage of this configuration is, that a surrounding area of the lighting device can be sufficiently brightly illuminated.

There are several ways how to design and further develop the teaching of the present invention in an advantageous way. To this end, it is to be referred to the patent claims subordinate to patent claim 1 on the one hand and to the following explanation of preferred examples of embodiments of the invention, illustrated by the drawing on the other hand. In connection with the explanation of the preferred embodiments of the invention by the aid of the drawing, generally preferred embodiments and further developments of the teaching will be explained.

In the drawings
- Fig. 1: shows a lighting device according to an embodiment of the invention; and
- Fig. 2: shows an access port for a fuel tank according to an embodiment of the invention.

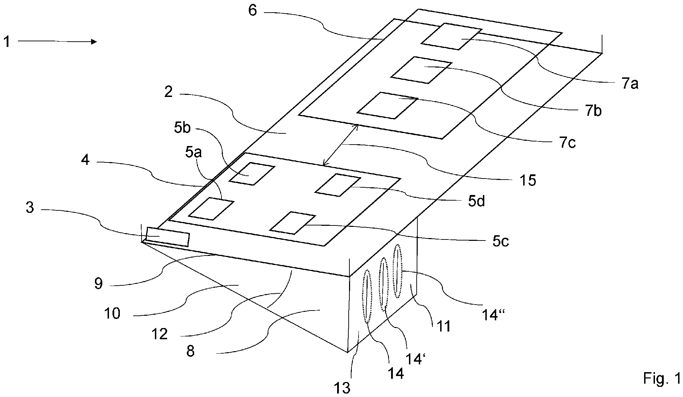

Figure 1 shows a lighting device according to an embodiment of the invention.

The lighting device 1 comprises a flat circuit board 2, especially a printed circuit board, with a connector 3 to connect the circuit board 2 to a control unit (not shown). The circuit board 2 comprises two sections. The first section 4 comprises first lights 5a, 5b, 5c, 5d, here in form of LEDs, and the second section 6 comprises three second lights 7a, 7b, 7c, also in form of LEDs. The first section 4 and the second section 6 are positioned next to each other but are distinct from another, for instance the outer circumference of both sections may have a minimal distance 15 of at least 1 cm, preferably at least 2 cm, for instance more than 3, 4 or 5 cm. The first lights 5a-d can be RGB LEDs, that are able to display a variety of different colors. It is also possible that the lights 5a-d are monochromatic LEDs which can all display only one color, preferably all lights 5a-d can display a different color. The three second LEDs 7a-c can be monochromatic LEDs, preferably white LEDs, that are configured to produce ambient light within a recess (not shown), in which the lighting device 1 can be installed.

Underneath the first section 4 a light guide element 8 is positioned. The light guide element 8 has the form of a prism, specifically a prism with a triangular side and more specifically a wedge, with a first side 9 for receiving light from the first lights 5a-d, a second side 10 for redirecting the light and a third side 11 for displaying the light. The first side 9 is positioned directly adjacent to the first section 4, such that light from the first lights 5a-d can enter the light guide element 8. Specifically, the light guide element 8 can be a plastic lense, wherein the second side 10 comprises a mirroring surface to redirect the light. The light guide element 8 can be attached directly to the circuit board 2.

The first and third side 9, 11 can be positioned substantially vertical to each other, whereas the first and second side 9, 10 can be arranged at an angle 12 to each other. Due to the angle 12 the light from lights 5a-d can be redirected to the third surface 11, specifically the angle 12 can be between 10° and 45°, preferably between 20° and 35°.

The third side 11 comprises a first area 13 and a second area 14, wherein the second area 14 is in the form of a thin line that spans across the third side 11 (surrounded with dots). Specifically, multiple second areas 14, 14', 14" are provided. It could also be envisioned that the second areas 14, 14', 14" are not provided by thin lines, but any other shape, such as circles, rectangles or polygons. Moreover, the areas 14 can be positioned parallel to each other and/or can intersect each other. The first and second area 13, 14, 14', 14" allow a different amount of light to pass through. This means, that when the lights 5a-d produce light, the first area 13 will be dimmer or brighter illuminated than the second area 14, 14', 14", preferably dimmer. Thereby, a pattern of the second area 14 will be visible to a user.

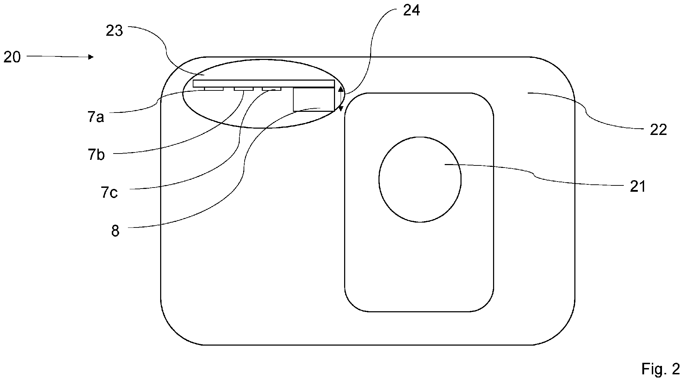

Figure 2 shows an access port for a fuel tank.

The access port 20 comprises an access 21 for inserting a fueling rod such that fuel like gasoline can be pumped into a fuel tank (not shown). It is also feasible, that the access 21 conducts electricity to a battery (not shown). The access 21 is positioned within an access cavity 22, which further comprises a lighting device 1 positioned in a recess 23, specifically a lighting device 1 according to figure 1.

The lighting device 1 comprises three second LEDs 7a, 7b, 7c that provide ambient light in order to evenly light up the access cavity 22. Furthermore, the lighting device 1 comprises a light guide element 8, which can guide light to a user standing in front of the access port 20. Specifically, the light guide element 8 can guide light produced by first LEDs (not shown in figure 2) to the user. Due the orientation of the light guide element, a user can directly see the light of the first LEDs. The light guide element guides the light of the first LEDs in such a way, that the light of the individual LEDs can be distinguished from each other.

The required dimensions of the recess 23, in which the lighting device 1 is positioned, is mainly determined by the height 24 of the light guide element 8.

At least one embodiment may provide at least one of the following features and/or at least one of the following advantages:
- Ambient light and distinct light by a single lighting device.
- Small required space for the lighting device.
- Cheap manufacturing.
- Easy Installation.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### List of reference signs

- 1: Lighting Device
- 2: Circuit Board
- 3: Connector
- 4: First section
- 5a-d: First Lights
- 6: Second Section
- 7a-c: Second Lights
- 8: Light Guide Element
- 9: First side of Light Guide Element
- 10: Second side of Light Guide Element
- 11: Third side of Light Guide Element
- 12: Angle
- 13: First Area
- 14, 14', 14": Second Area
- 15: Distance

- 20: Access Port
- 21: Access
- 22: Access Cavity
- 23: Recess
- 24: Height of Light Guide Element

## Claims

1. Lighting device (1) for a vehicle, comprising a circuit board (2), wherein
the circuit board (2) comprises first lighting elements (5a-d) on a first section (4) of the circuit board (2), second lighting elements (7a-c) on a second section (6) of the circuit board, and
at least one light guide element (8) for redirecting light from the first lighting elements (5a-d), wherein
the first and second section (4, 6) are spaced apart from another, **characterized in that**
the said at least one light guide element (8) is provided in the form of a prism.

2. Lighting device (1) according to claim 1, **characterized in that** at least one, preferably both, of the first and second lighting elements (7a, 7b, 7c) is provided in form of one or more LEDs.

3. Lighting device (1) according to claim 1 or 2, **characterized in that** the first lighting elements (5a-d) are adapted to provide light of different colors and wherein the second lighting elements (7a-c) are adapted to only provide light of one color, preferably white.

4. Lighting device (1) according to any of claims 1 to 3, **characterized in that** said prism (8) comprises a first side (9) for receiving light from said first lighting elements (5a-d), a second side (10) placed at an angle (12) to the first side (9) for redirecting the light and a third side (11) for displaying the light.

5. Lighting device (1) according to claim 4, **characterized in that** said angle (12) is between 10° and 70°, preferably between 15° and 55°, especially between 20° and 40°.

6. Lighting device (1) according to claims 4 or 5, **characterized in that** the second side (10) comprises a mirror coating.

7. Lighting device (1) according to any of claims 4 to 6, **characterized in that** the third side (11) comprises two kinds of areas (13, 14, 14', 14"), wherein a first area (13) is adapted to provide a first amount of light to pass through and a second area (14, 14', 14"), which is adapted to provide a second amount of light to pass through, wherein the first amount is larger than the second amount, preferably wherein a plurality of first and/or second areas (13, 14, 14', 14") is provided.

8. Lighting device (1) according to any of claims 1 to 7, **characterized in that** the light guide element (8) is made at least partly from plastic.

9. Lighting device (1) according to claim 8, **characterized in that** the light guide element (8) comprises a plastic lens.

10. Lighting device (1) according to any of claims 1 to 9, **characterized in that** the light guide element (8) is adapted to diffuse light from the first lighting elements (5a-d).

11. Lighting device (1) according to any of claims 1 to 10, **characterized in that** the lighting device (1) comprises four first lighting elements (5a-d).

12. Lighting device (1) according to any of claims 1 to 11, **characterized in that** the lighting device (1) comprises three second lighting elements (7a-c).

13. Lighting device (1) according to any of claims 1 to 12, **characterized in that** the first lighting elements (5a-d) are configured to provide distinct light signals.

14. Lighting device (1) according to any of claims 1 to 13, **characterized in that** the second lighting elements (7a-c) are configured to provide ambient light.

15. Access port (20) for a fuel tank or an electric battery of a vehicle with a lighting device (1) according to any of claims 1 to 14.
